# EUROPÄISCHE PATENTANMELDUNG

(11) **EP 1 092 344 A2**
(43) Veröffentlichungstag der Anmeldung: **18.04.2001**
(21) Anmeldenummer: 00120608.5
(22) Anmeldetag: 21.09.2000
(51) Int. Cl.: A01G 9/10

(54) **Kastenförmige Steige**

(30) Priorität: 13.10.1999 DE 19949218
(71) Anmelder: W. u. H. Fernholz (GmbH & Co. KG), 58540 Meinerzhagen (DE)
(72) Erfinder: Fernholz, Helmut, 58540 Meinerzhagen (DE)
(74) Vertreter: Hassler, Werner, Dr.

(57) **Zusammenfassung**

Eine kastenförmige Steige in Form eines Folientiefziehteils umfassend zwei durch einen Steg am Oberrand miteinander verbundene Rechteckbehälter, wobei in Längsrichtung des Steges eine Rinne mit profilierten Schwächungsstellen in Längsrichtung des Rinnenbodens verläuft. Das technische Problem besteht darin, eine derartige Steige in mindestens zwei Rechteckbehälter leicht teilbar unter Beibehaltung der Festigkeit und Querstabilität der kastenförmigen Steige auszubilden. Der Rinnenboden (7) weist in Längsrichtung eine wellenförmige Profilierung (8) auf, und die Schwächungsstellen sind als Perforationen (9) ausgebildet.

## Beschreibung

Die Erfindung betrifft eine kastenförmige Steige in Form eines Folientiefziehteils umfassend zwei durch einen Steg am Oberrand miteinander verbundene Rechteckbehälter, wobei in Längsrichtung des Steges eine Rinne mit profilierten Schwächungsstellen in Längsrichtung des Rinnenbodens verläuft.

Derartige kastenförmige Steigen oder Behälter dienen zur Aufnahme von Verkaufseinheiten wie Topfpflanzen. Bei der Lagerung und beim Transport sollen möglicht viele Verkaufseinheiten in einer Steige Platz finden. Jedoch soll ein Verkauf auch in kleineren Gebinden möglich sein. Die Steige soll insbesondere die Handhabbarkeit von Topfpflanzen verbessern.

Die AT PS 337 080 beschreibt eine Steige der gattungsgemäßen Art, bei der die Schwächungsstellen in gleicher Höhe und gleicher Profilierung innerhalb des in Längsrichtung im wesentlichen ebenen Rinnenbodens liegen. Damit hat die Rinne nur geringe Querstabilität und Quersteifigkeit, was für die Handhabung der steigen nachteilig ist.

Daher besteht die Aufgabe, eine derartige Steige in mindestens zwei Rechteckbehälter leicht teilbar unter Beibehaltung der Festigkeit und Querstabilität der kastenförmigen Steige auszubilden.

Diese Aufgabe wird nach der Erfindung dadurch gelöst, daß der Rinnenboden in Längsrichtung eine wellenförmige Profilierung aufweist und daß die Schwächungsstellen als Perforationen ausgebildet sind.

Die Erfindung unterscheidet sich insofern vom Stand der Technik, als die wellenförmige Profilierung des Rinnenbodens oder der Rinne Abstützbereiche in verschiedener Höhe ergibt, so daß sich Zugbeanspruchungen und Druckbeanspruchungen quer zur Rinnenachse ergeben, die ein hohes Widerstandsmoment bedingen. Damit ist eine hohe Steifigkeit quer zu der Rinnenachse gegeben. Beim Transport der Steige und beim Aufstellen auf eine Lagerplatte eines Regals oder Wagens hat der Steg trotz der Perforaion ein so hohes Widerstandmoment, daß er nicht abknickt. Trotzdem ist ein müheloses Trennen der beiden Rechteckbehälter durch Aufreißen der Perforation möglich.

Die Stabilität wird dadurch gesichert, daß die Rinnenwände etwa senkrecht zur Fläche des Steges ausgerichtet sind.

Wenn einem Querabknicken der Rinne noch stärker entgegengewirkt werden soll, wird vorgeschlagen, daß die Perforationen in wechselnder Dichte in Abhängigkeit von der Tiefe des Rinnenbodens ausgebildet sind. Die Perforationen können also in unterschiedlichem Abstand oder in unterschiedlicher Größe vorgesehen sind. Durch eine solche Ausbildung kann man auch das Aufreißen der Perforationen erleichtern.

Ein Ausführungsbeispiel wird anhand der Zeichnung erläutert, in der darstellen:
- Fig. 1: eine Draufsicht auf eine kastenförmige Steige,
- Fig. 2: einen Schnitt nach der Linie II-II in Fig. 1
- Fig. 3: einen Schnitt nach der Linie III-III in Fig. 2 und
- Fig. 4: einen Schnitt nach der Linie IV-IV in Fig. 2

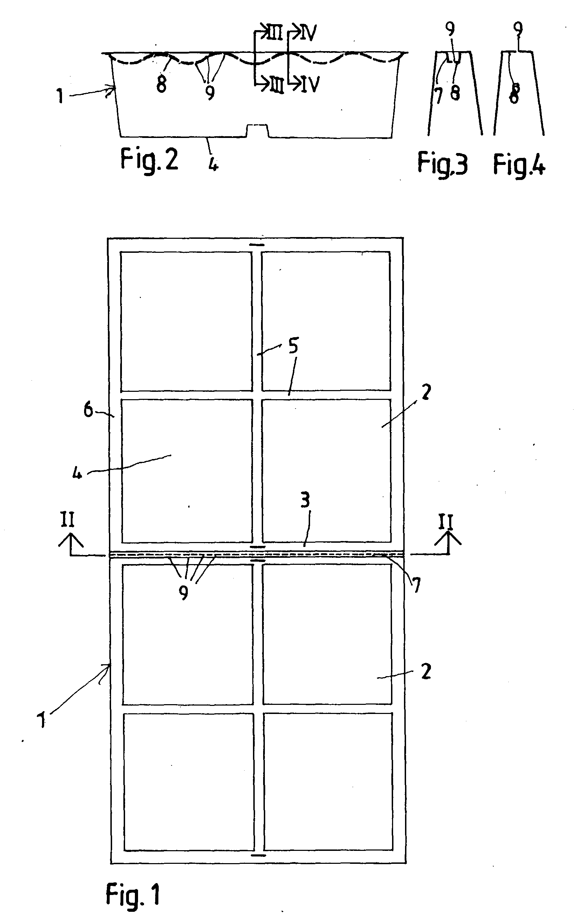

Fig. 1 zeigt eine kastenförmige Steige 1 in Form eines Folientiefziehteils aus zwei Rechteckbehältern 2, die durch einen Steg 3 miteinander verbunden sind. Jeder Rechteckbehälter 2 oder Einzelbehälter hat in der Bodenwand 4 kreuzförmig angeordnete Rippen 5 zur Verstärkung, so daß vier Einzelaufnahmen vorhanden sind. Ebenfalls zur Verstärkung ist ein oberer umlaufender Randsteg 6 ausgebildet.

In den Steg 3 ist in Längsrichtung eine Rinne 7 eingeformt, deren Rinnenboden in Längsrichtung eine Profilierung, insbesondere eine wellenförmige Profilierung 8 aufweist. Somit hat die Rinne 7 eine sich in Längsrichtung ändernde Tiefe. In der Schnittebene III-III nach Fig. 3 ist die Tiefe der Rinne 7 am größten. In der Schnittebene IV-IV nach Fig. 4 ist die Tiefe der Rinne 7 am kleinsten und kann den Wert "0" haben.

In Längsrichtung der Rinne 7 sind im Rinenboden Perforationen 9 in einer Perforationslinie ausgebildet. Die wellenförmige Profilierung 8 ergibt eine Abstützung der Rechteckbehälter 2 gegeneinander in unterschiedlichen Höhen, so daß die sich ausbildenden Zugbelastungen und Druckbehlastungen in Querrichtung der Rinne eine hohe Steifigkeit oder ein hohes Widerstandsmoment sicherstellen.

Bei der Handhabung der mit Topfpflanzen bestückten Steige durch Anfassen der Rechteckbahälter an den Randstegen bleiben dieselben horizontal aufeinander ausgerichtet, ein Abknicken im Bereich des Steges ist durch die wellenförmige Profilierung ausgeschlossen. Damit läßt sich die Steige sicher handhaben und transportieren, wenn sie mit Topfpflanzen bestückt ist.

Die Profilierung kann weitgehend beliebig gestaltet sein. Durch unterschiedliche Dichte der Perforation in verschiedenen Höhen der Rinne kann man das Widerstandsmoment den jeweiligen Belastungsverhältnissen anpassen. Die Perforation erlaubt ein Aufreißen und damit Abtrennen der Rechteckbehälter, so daß jeder Rechteckbehälter als gesonderte Verkaufseinheit nutzbar ist.

## Patentansprüche

1. Kastenförmige Steige in Form eines Folientiefziehteils umfassend zwei durch einen Steg am Oberrand miteinander verbundene Rechteckbehälter, wobei in Längsrichtung des Steges eine Rinne mit profilierten Schwächungsstellen in Längsrichtung des Rinnenbodens verläuft, dadurch gekennzeichnet, daß der Rinnenboden (7) in Längsrichtung eine wellenförmige Profilierung (8) aufweist und daß die Schwächungsstellen als Perforationen (9) ausgebildet sind.

2. Steige nach Anspruch 1, dadurch gekennzeichnet, daß die Rinnenwände etwa senkrecht zur Fläche des Steges (3) ausgerichtet sind.

3. Steige nach Anspruch 1 oder 2, dadurch gekennzeichnet, daß die Perforationen (9) in wechselnder Dichte in Abhängigkeit von der Tiefe des Rinnenbodens ausgebildet sind.
